Europäisches Patentamt

European Patent Office

Office européen des brevets

(11) Veröffentlichungsnummer: **0 237 958 B1**

## EUROPÄISCHE PATENTSCHRIFT

(45) Veröffentlichungstag der Patentschrift: **06.11.91**

(51) Int. Cl.⁵: **H04N 5/782**, H04N 7/087

(21) Anmeldenummer: **87103576.2**

(22) Anmeldetag: **12.03.87**

(54) Empfängerseitige Einrichtung mit einer senderseitig steuerbaren Betriebsart.

(30) Priorität: **17.03.86 DE 3608847**

(43) Veröffentlichungstag der Anmeldung:
**23.09.87 Patentblatt 87/39**

(45) Bekanntmachung des Hinweises auf die
Patenterteilung:
**06.11.91 Patentblatt 91/45**

(84) Benannte Vertragsstaaten:
**AT BE CH DE ES FR GB GR IT LI LU NL SE**

(56) Entgegenhaltungen:
**EP-A- 0 118 104**
**EP-A- 0 133 985**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Eigeldinger, Norbert**
**Seb.-Kneipp-Strasse 104**
**W-7730 Villingen-Schwenningen(DE)**
Erfinder: **Gyarmati, Sandor, Ing.-grad.**
**Waidmannsweg 4**
**W-7730 Villingen-Schwenningen(DE)**

(74) Vertreter: **Einsel, Robert, Dipl.-Ing. et al**
**Deutsche Thomson-Brandt GmbH Patent-**
**und Lizenzabteilung Göttinger Chaussee 76**
**W-3000 Hannover 91(DE)**

## Beschreibung

Die Erfindung betrifft ein Verfahren zum Verarbeiten von Signalen in einer empfängerseitigen Einrichtung mit einer senderseitig steuerbaren Betriebsart nach dem Oberbegriff des Anspruchs 1 sowie eine empfängerseitige Einrichtung zur Durchführung des Verfahrens.

Das eingangs genannte Verfahren und die eingangs genannte Einrichtung dienen beispielsweise dazu, ein korrektes Wiedergeben oder Aufzeichnen des durch das betreffende Kennsignal charakterisierten Sendebeitrages zu ermöglichen. Das Kennsignal wird als zusätzliche Information zum Ton- und/oder Videosignal übertragen, etwa über einen sogenannten Hilfsträger, eine sogenannte Datenzeile im Videosignal oder dergleichen. In der Bundesrepublik Deutschland sind hierfür mehrere Übertragungsverfahren vorgeschlagen worden. Auf dem Fernsehsektor wurde ein solches Übertragungssystem unter der Bezeichnung Video-Programm-System (VPS) kürzlich eingeführt. Für Hörfunksendungen sind vergleichbare Verfahren unter der Bezeichnung Radio-Daten-Service (RDS) bekannt. Dabei wird in beiden Fällen zu jedem Sendebeitrag ein diesen Sendebeitrag charakterisierendes Kennsignal übertragen, das sogenannte VPS- bzw. RDS-Signal, das auf der Empfangsseite mit einer vom Benutzer programmierten Kennung verglichen wird. Ein solches Kennsignal enthält Informationen über den prognostizierten Sendebeginn und die den betreffenden Sendebeitrag ausstrahlende Rundfunkanstalt. Bei Übereinstimmung wird eine Schaltspannung erzeugt, die dadurch genau zum tatsächlichen Start-Zeitpunkt des Sendebeitrages das Empfangsgerät genau für die tatsächliche Zeitdauer des Sendebeitrages einschaltet. Verschiebt sich beispielweise ein gewünschter Sendebeitrag aus aktuellem Anlaß, so wird auch das Einschalten des Empfangsgerätes für den gewünschten Sendebeitrag entsprechend verzögert. Beginnt dann schließlich die vorgesehene Sendung zu einem späteren Zeitpunkt, so wird diese - gesteuert durch das Kennsignal - genau während ihrer tatsächlichen Zeitdauer empfangen und/oder aufgezeichnet.

Aus der EP-A-0 118 104 ist ein gattungsgemäßes Verfahren für ein Empfangsgerät der Unterhaltungselektronik bekannt. Programmierten Sendebeiträgen wird bei diesem bekannten Empfangsgerät ein sogenanntes Zeitfenster zugeordnet, damit die im Übertragungssignalweg der Empfangsanordnung liegenden Schaltungen einschließlich der Schaltung für die Erkennung des charakterisierenden Kennsignals nicht dauernd eingeschaltet zu bleiben brauchen. Bei dieser bekannten Einrichtung ist es von Nachteil, daß mögliche zeitliche Überschneidungen von Aufzeichnungsaufträgen nicht berücksichtigt werden.

Die zum Speichern von Sendebeiträge charakterisierenden Kennsignalen und/oder Ein- oder Ausschaltzeiten dienende Speichereinrichtung wird im allgemeinen als Timer bezeichnet. Dem Timer wird von einem Kennsignal-Decoder das jeweils empfangene Kennsignal zugeführt, er vergleicht die gespeicherten Daten mit den entsprechenden Daten des Kennsignals und bewirkt während der gesamten Dauer des Übereinstimmens der gespeicherten Daten mit den entsprechenden Daten des Kennsignals den Betrieb der empfängerseitigen Einrichtung.

Können in einen Timer Kenndaten mehrerer Sendebeiträge gespeichert werden, so kann es infolge von Programmverschiebungen zu zeitlichen Überschneidungen kommen, die beim Programmieren des Timers noch gar nicht vorhersehbar waren. Verschiebt sich beispielsweise ein erster programmierter Sendebeitrag so sehr, daß sein Beginn zeitlich später liegt als der Beginn eines zweiten programmierten Sendebeitrages, so wird zunächst auf das den zweiten Sendebeitrag betreffende Rundfunkprogramm umgeschaltet und auf das Auftreten des diesem zweiten Sendebeitrag zugeordneten Kennsignales gewartet. Dies hat jedoch zur Folge, daß der erste Sendebeitrag "vergessen" wird und nicht mehr empfangen und/oder aufgezeichnet wird, selbst wenn sein tatsächlicher Sendebeginn nach dem tatsächlichen Ende des zweiten Sendebeitrages liegen sollte. Es ist daher schon vorgeschlagen worden, den Timer-Speicher nach Beendigung eines Aufzeichnungsauftrages zyklisch abzufragen, wobei der Reihe nach auf die abgespeicherten Kennsignal-Daten umgeschaltet wird. Dabei muß jedoch die für die Abstimmung vorhandene PLL-Schaltung auf die betreffenden Empfangskanäle umgeschaltet werden. Dieses Umschalten verursacht jedoch Störungen, falls gleichzeitig noch ein weiterer Rundfunkempfänger betrieben wird, der Benutzer beispielsweise eine Fernsehsendung sieht und gleichzeitig mit einem Videorecorder automatisch Sendebeiträge aufgenommen werden.

Der Erfindung liegt die Aufgabe zugrunde, derartige "vergessene" Sendungen doch noch - wenn unter Umständen auch nur bruchstückhaft - zu erfassen und die genannten Störungen zu vermeiden.

Diese Aufgabe wird durch die in Anspruch 1 angegebenen Maßnahmen gelöst. Diese Aufgabe wird auch durch in Anspruch 11 angegebenen Maßnahmen gelöst.

Weitere Vorteile und Merkmale der Erfindung sind nachstehend an zwei Ausführungsbeispielen anhand der Zeichnung erläutert. Dabei zeigen:

Fig. 1 ein Blockschaltbild eines erfindungsgemäßen Videorecorders und

Figuren 2 und 3 zeitliche Ablaufdiagramme zur Erläuterung der Wirkungsweise der Erfindung.

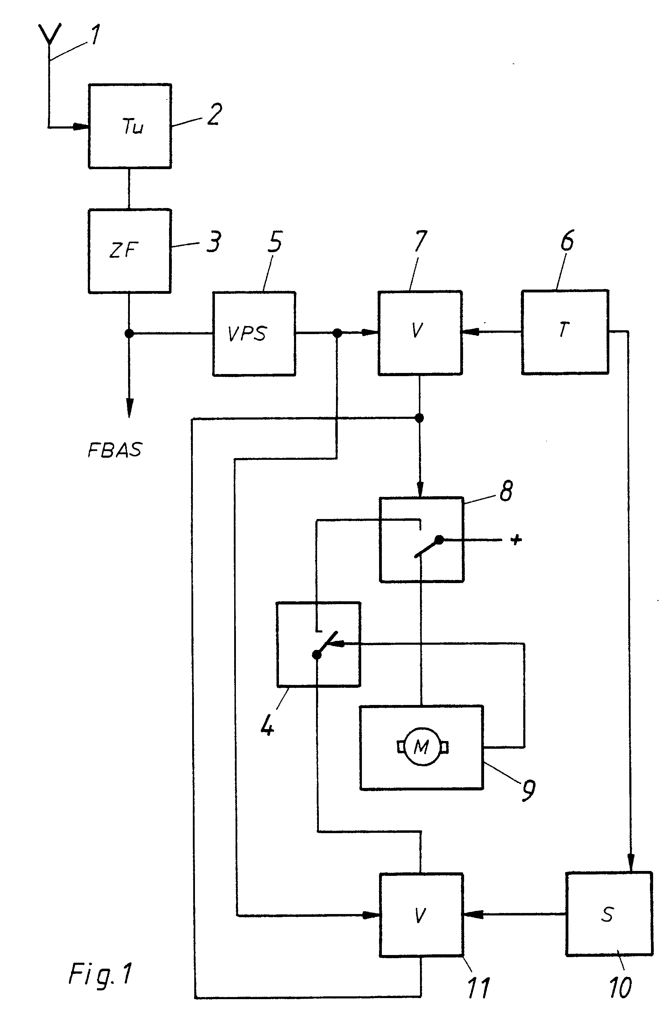

Bei einem in Fig. 1 in einem Blockschaltbild dargestellten Videorecorder werden über eine Antenne 1 empfangene Fernsehsignale über einen Tuner 2 selektiert und über einen Zwischenfrequenzverstärker 3 zur weiteren Verarbeitung von Bild-, Ton- und Synchronsignalen in Pfeilrichtung FBAS nicht näher dargestellten Stufen zugeleitet und schließlich über Aufzeichnungsköpfe auf ein Magnetband gespeichert.

Die Fernsehsignale enthalten während der gesamten Dauer eines Sendebeitrages ein diesen Sendebeitrag charakterisierendes Kennsignal, das sogenannte VPS-Signal. Solange in einem Timer 6 gespeicherte Daten mit den entsprechenden Daten des VPS-Signals übereinstimmen, wird das Aufzeichnen dieses Sendebeitrages bewirkt. Zum Decodieren der VPS-Daten dient ein VPS-Decoder 5. Die im Timer 6 abgespeicherten VPS-Daten werden laufend mit den empfangenen VPS-Daten in einer Vergleichsstufe 7 verglichen.

Bei Übereinstimmung der entsprechenden Daten gibt die Vergleichsstufe 7 ein Signal ab, welches über eine Schaltstufe 8 den Aufnahmebetrieb des Videorecorders in Gang setzt.

Fällt ein mit einem VPS-Signal gekennzeichneter Sendebeitrag aus oder verspätet er sich und wird der Timer 6 auf einen anderen Sendebeitrag umgeschaltet, so werden die (noch) nicht empfangenen und im Timer 6 abgespeicherten VPS-Daten in einem Zusatzspeicher 10 abgelegt.

Mit Ende eines Sendebeitrages entfällt auch das diesem Sendebeitrag zugeordnete VPS-Signal, so daß der Aufnahmebetrieb gestoppt wird. Gleichzeitig wird über die Schaltstufe 8 eine weitere Vergleichsstufe 11 aktiviert, welche die in dem Zusatzspeicher 10 abgelegten Daten mit den aus dem VPS-Decoder 5 kommenden VPS-Daten vergleicht.Diese zweite Vergleichsstufe 11 tritt jedoch erst dann in Aktion, wenn bereits ein Sendebeitrag aufgezeichnet wurde. Dies kann dadurch erreicht werden, daß ein aus einer Steuerelektronik 9 für einen Bandtransport-Motor M des Videorecorders entnommenes Signal einen Schalter 4 schließt, so daß erst von diesem Zeitpunkt an die Vergleichsstufe 11 aktiviert wird.

Erscheint nun später das in dem Zusatzspeicher 10 abgelegte VPS-Signal am Ausgang des VPS-Decoders 5, so wird der Aufzeichnungsbetrieb über die Schaltstufe 8 wieder in Gang gesetzt. Auf diese Weise gelangt eine für einen früheren Zeitpunkt im Timer 6 abgespeicherte Sendung noch zur Aufzeichnung, obwohl der Timer diesen früheren Zeitpunkt als abgearbeitet betrachtet.

Im vorstehenden Ausführungsbeispiel ist der Fall beschrieben, daß die in dem Timer 6 enthaltenen VPS-Daten, deren zugeordneten SEndebeiträge (noch) nicht aufgezeichnet wurden, in dem Zusatzspeicher 10 gespeichert werden.

Bei einem anderen, hier nicht näher dargestellten Ausführungsbeispiel ist vorgesehen, daß in den Zusatzspeicher 10 nicht die VPS-Daten des betreffenden (noch) nicht aufgezeichneten Sendebeitrages übernommen werden sondern lediglich die "Adresse" des jeweiligen Speicherplatzes im Timer 6, unter der diese VPS-Daten gespeichert sind. Dies hat den Vorteil, daß gegenüber dem vorbeschriebenen Ausführungsbeispiel im Zusatzspeicher 10 erheblich weniger umfangreiche Daten gespeichert werden müssen, dieser Zusatzspeicher also "kleiner" und somit kostengünstiger ausgebildet sein kann. In einem solchen Fall kann zudem auf die beschriebene zweite Vergleichsstufe 11 verzichtet werden. Stattdessen wird, etwa über die Schaltstufe 8, nach Abschluß eines Aufzeichnungsauftrages der Zusatzspeicher 10 zyklisch nach den Adressen von Speicherplätzen des Timers 6 abgefragt, die (noch) nicht empfangene VPS-Daten enthalten. Sind in dem Zusatzspeicher 10 solche Adressen vorhanden, so wird die im Zusatzspeicher 10 an erster Stelle gespeicherte Adresse des Timers 6 aufgerufen. Diese im Timer 6 unter dieser Adresse gespeicherten VPS-Daten werden nun laufend mit den empfangenen VPS-Daten in der Vergleichsstufe 7 verglichen, nachdem zuvor der Tuner 2 automatisch gemäß den im Timer 6 gespeicherten Daten auf die zugehörige Frequenz eingestellt wurde.

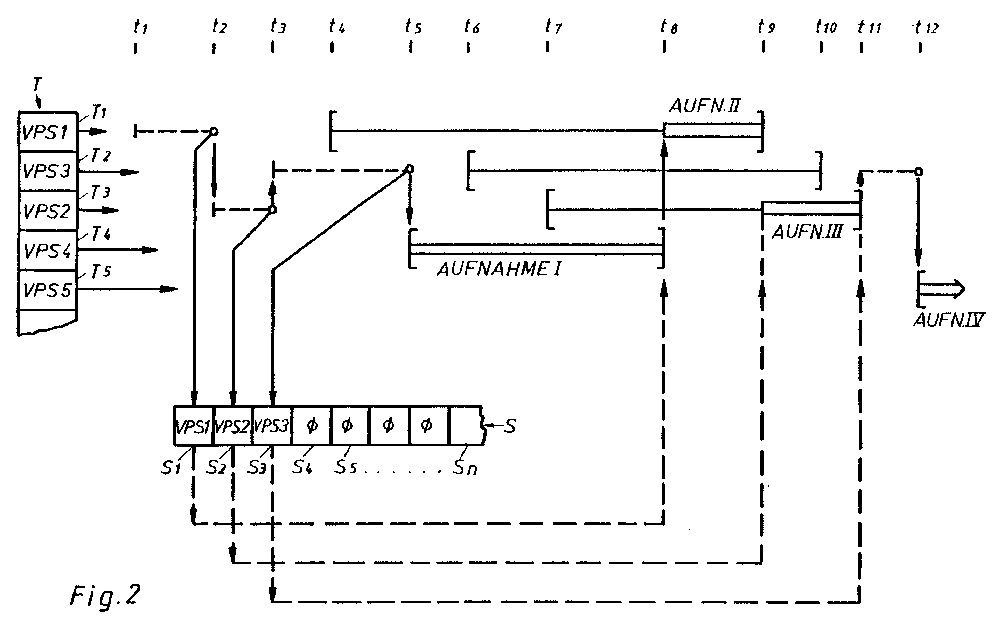

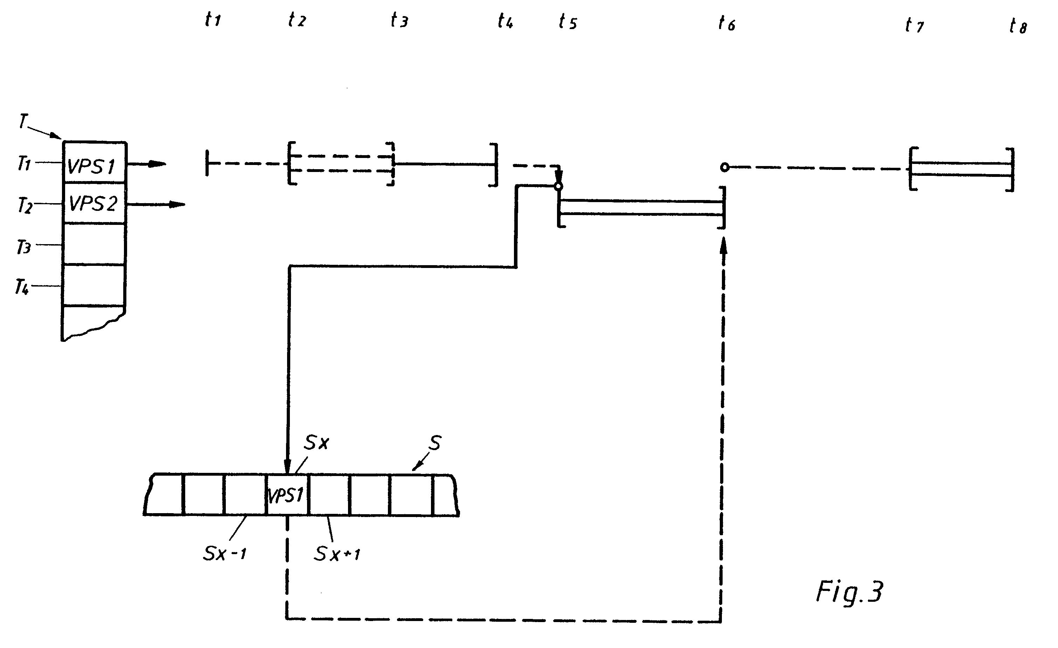

Mit Hilfe der Figuren 2 und 3 wird an zeitlichen Ablaufdiagrammen die Wirkungsweise der Erfindung erläutert, wobei hier zu Zwecken einer übersichtlichen Darstellung andere Bezugszeichen als zu Fig. 1 verwendet werden.

In einen in Fig. 2 mit T bezeichneten Timer wurden zu 5 Sendebeiträgen die jeweiligen Einschaltzeiten und/oder Kenndaten VPS1 - VPS5 eingegeben und auf Speicherplätzen T1 - T5 im Timer T gespeichert.

Zu einem Zeitpunkt t1, der beispielsweise 10 Minuten vor dem prognostizierten Beginn des Sendebeitrages liegt, schaltet sich der Empfangsteil 2,3,5 des Videorecorders ein und wartet auf die VPS-Daten VPS1. In Folge einer Programmverschiebung kann der diesen VPS-Daten zugeordnete Sendebeitrag jedoch erst zu einem späteren Zeitpunkt t4 übertragen werden. Dieser Sendebeitrag mit den VPS-Daten VPS1 würde zu diesem Zeitpunkt aufgenommen werden, wenn der Timer den Tuner 2 zum Zeitpunkt t2 nicht auf den - gemäß dem prognostizierten Sendebeginn oder der programmierten Einschaltzeit - nächstfolgenden Sendebeitrag betreffenden, im Timerplatz T3 gespeicherten Sender umgeschaltet hätte, von dem der Sendebeitrag mit den Daten VPS2 ausgestrahlt werden soll. Der Empfangsteil wartet nun auf die VPS-Daten VPS2. Gemäß der Erfindung wird

3

zum Zeitpunkt t2 der Inhalt oder die Adresse des Timerspeichers T1 in einer weiteren Speichereinrichtung S auf deren erstem Speicherplatz S1 abgelegt.

Zu einem Zeitpunkt t3 konnten die VPS-Daten VPS2 wegen einer Programmverschiebung auch dieses Sendebeitrages noch nicht empfangen werden. Der Timer schaltet nun den Tuner erneut um zu einem anderen Sender und legt die Daten VPS2 oder die Adresse des Timerplatzes T3 auf den Speicherplatz S2 der Speichereinrichtung S.

Zu einem Zeitpunkt t4 wird nun mit dem Ausstrahlen des für einen früheren Zeitpunkt angekündigten und mit den Daten VPS1 gekennzeichneten Sendebeitrages vom zugehörigen Sender aus begonnen.

Tatsächlicher Anfang und tatsächliches Ende von Sendungen sind in Fig. 2 durch eckige Klammern gekennzeichnet. Die zur Aufzeichnung gelangenden zeitlichen Abschnitte sind durch einen waagerechten Doppelstrich besonders hervorgehoben.

Zu einem Zeitpunkt t5 hatte der Empfangsteil noch keine VPS-Daten des mit VPS3 gekennzeichneten Sendebeitrages erhalten. Der Empfangsteil wird nunmehr durch den Timer T wiederum auf einen vorprogrammierten Sender, von dem ein Sendebeitrag mit den Daten VPS4 erwartet wird, umgeschaltet, nachdem die Daten VPS3 oder die Adresse des Timerplatzes T2 zuvor im Speicher S auf den Speicherplatz S3 abgelegt worden ist.

Der Sendebeitrag mit den Daten VPS4 beginnt im dargestellten Beispiel tatsächlich zu der prognostizierten Zeit, so daß zum Zeitpunkt t5 die erste Aufnahme I beginnt.

Zu einem Zeitpunkt t6 beginnt der verspätete, mit VPS3 senderseitig gekennzeichnete Sendebeitrag, der jedoch nicht zur Aufzeichnung kommt, da die Aufzeichnung mit der Aufnahme I noch läuft.

Auch der zu einem Zeitpunkt t7 verspätet beginnende Sendebeitrag mit den Daten VPS2 beeinflußt die Aufzeichnung mit der Aufnahme I nicht, diese wird zu einem Zeitpunkt t8, der dem tatsächlichen Ende des Sendebeitrages entspricht, beendet. Das Ende dieser Aufnahme I dient als Kriterium zum Abfragen des Speichers S nach noch nicht abgearbeiteten Sendebeiträgen, indem die Speicher S1 - Sn zyklisch abgefragt werden.

Im dargestellten Beispiel wird festgestellt, daß der Sendebeitrag mit den Daten VPS1 noch gesendet wird, so daß auf diesen Sendebeitrag umgeschaltet wird, und im Anschluß an Aufnahme I auch der Rest des mit den Daten VPS1 gekennzeichneten Sendebeitrages als Aufnahme II zur Aufzeichnung auf das Magnetband gelangt.

Zu einem Zeitpunkt t9 endet der Sendebeitrag mit den Daten VPS1 und die Aufnahme II wird daher beendet, worauf der Speicher S weiter abgefragt wird und festgestellt wird, daß der Sendebeitrag mit den Daten VPS2 zur Zeit noch ausgestrahlt wird. Der letzte Teil dieses Sendebeitrages wird daher als Aufnahme III noch aufgezeichnet. Am Ende dieser Aufnahme III zu einem Zeitpunkt t11 wird der Speicher S wiederum abgefragt, wobei festgestellt wird, daß der Sendebeitrag mit der Kennung VPS3 noch nicht aufgezeichnet wurde. Dieser Sendebeitrag kann jedoch nicht mehr zur Aufzeichnung gelangen, da er zum Zeitpunkt t10 bereits beendet wurde. Der Timer T des Videorecorders schaltet nun zum Zeitpunkt t12 auf den Sendebeitrag mit den Daten VPS5 um, der im vorliegenden Beispiel zum prognostizierten Zeitpunkt beginnt und als Aufnahme IV auf das Magnetband gelangt.

Besonders wirksam kommt die Erfindung dann zur Geltung, wenn beispielsweise ein vorprogrammierter Sendebeitrag an das Ende der Sendezeit eines Senders verlegt wird, was häufig dann vorkommt, wenn eine aktuelle Sendung eingeschoben wird. Dieser Fall wird im folgenden mit Hilfe der Figur 3 beschrieben.

Zu einem Zeitpunkt t1 wird durch den Timer auf den im Timerplatz T1 vorprogrammierten Sendebeitrag mit den Daten VPS1, der vom Zeitpunkt t2 bis zum Zeitpunkt t3 ausgestrahlt werden sollte, eingeschaltet. Da ein aktueller, nicht in Timer vorprogrammierter Sendebeitrag zum Zeitpunkt t2 vom Sender in den Programmablauf zwischengeschoben wird, erscheinen nicht die erwarteten Daten VPS1. Die eingeschobene Sendung dauert bis zum Zeitpunkt t4. Zum Zeitpunkt t5 schaltet der Timer auf Kanal und Sendezeit des Sendebeitrages mit den Daten VPS2 um. Dieser Sendebeitrag endet zum Zeitpunkt t6.

Mit dem Umschalten auf den neuen Sender werden die Daten VPS1 in den Speicher S auf den Speicherplatz Sx gelegt. Ab dem Zeitpunkt t6 wird der Speicher S abgefragt und festgestellt, daß der Sendebeitrag mit den Daten VPS1 noch nicht aufgezeichnet wurde. Der Timer schaltet deshalb auf diesen Sendebeitrag um, der zum Zeitpunkt t7 ausgestrahlt und bis zum Sendeschluß t8 aufgezeichnet wird. Man erkennt, daß trotz des Einschiebens einer aktuellen Sendung im Zeitraum von t2 - t4 der auf einen späteren Zeitraum t7 - t8 verlegte Sendebeitrag trotzdem zur Aufzeichnung kommt.

Das Vorsehen des zweiten Speichers S hat - wie in der Beschreibung zu Fig. 2 besonders deutlich wird - den Vorteil, daß die VPS-Daten überfälliger, noch nicht abgearbeiteter Sendebeiträge nicht erneut einer Vergleichsoperation unterzogen werden müssen, um festzustellen, in welcher Reihenfolge die zugehörigen Aufzeichnungsaufträge in Abhängigkeit von dem prognostizierten Beginn des Sendebeitrages abzuarbeiten bzw. abzufragen sind. Vielmehr ist in dem Speicher S bereits abgelegt, in welcher Reihenfolge die Timer-Speicherplätze - in denen Daten noch nicht abgearbeiteter Sendebeiträge gespeichert sind - abzufragen sind. In dem Speicher S brauchen also nicht die gesamten VPS-Daten abgelegt zu werden, es reicht aus, dort die Adressen der Timer-Speicherplätze T1, T2,... abzulegen, in denen diese VPS-Daten zu finden sind. Der Platzbedarf in dem zusätzlichen Speicher S ist also relativ klein.

Ein zusätzlicher Vorteil ergibt sich noch, wenn der Timer T so programmiert werden kann, daß auf einen seiner Speicherplätze ein täglich oder wöchentlich durchzuführender Aufzeichnungsauftrag eingegeben werden kann. Ein solcher Auftrag kann z.B. darin bestehen, täglich eine bestimmte Nachrichtensendung aufzuzeichnen. Auch bei solchen im allgemeinen pünktlich ausgestrahlten Sendungen sind bisweilen Programmverschiebungen möglich, beispielsweise aufgrund von Sport-Sondersendungen. Ist nun zum prognostizierten Zeitpunkt das diesem Sendebeitrag zugeordnete VPS-Signal nicht vorhanden, und muß wegen eines nunmehr auszuführenden anderen Aufzeichnungsauftrages umgeschaltet werden, so werden die VPS-Daten des täglich auszuführenden Aufzeichnungsauftrages bzw. die Adresse des betreffenden Speicherplatzes des Speichers T in dem zusätzlichen Speicher S abgelegt. Nachdem dann der zwischenzeitlich aktuell gewordene Aufzeichnungsauftrag abgeschlossen ist, wird, wie oben beschrieben, der Speicher S nach noch nicht abgearbeiteten Sendebeiträgen abgefragt. Bei dem zyklisch erfolgenden Abfragen der Speicherplätze S1 - Sn wird dann festgestellt, daß der täglich durchzuführende Aufzeichnungsauftrag noch nicht abgearbeitet ist, so daß anhand der zugehörigen VPS-Daten auf den entsprechenden Sender umgeschaltet wird und auf das Auftreten dieser VPS-Daten - gegebenenfalls erneut - gewartet wird.

## Patentansprüche

1. Verfahren zum Verarbeiten von Signalen in einer empfängerseitigen Einrichtung, insbesondere in einem Audio-und/oder Videorecorder und/oder -Empfänger, mit einer - senderseitig durch ein während der gesamten Dauer eines Sendebeitrages übertragenes, diesen Sendebeitrag charakterisierendes Kennsignal - steuerbaren Betriebsart und mit einem programmierbaren Speicher (Timer T), in den in dem Kennsignal enthaltene, für ein Arbeiten in der steuerbaren Betriebsart erforderliche Kennungsdaten eingebbar sind, **dadurch gekennzeichnet,** daß eine zweite Speichereinrichtung (S) vorgesehen ist, in der anläßlich des Umschaltens auf einen im Zeitrang nachfolgenden programmierten Sendebeitrag automatisch in der zweiten Speichereinrichtung (S) Daten gespeichert werden, die sich auf den zuvor erwarteten Sendebeitrag beziehen, sofern von diesem Sendebeitrag nichts empfangen wurde, und daß nach Ablauf eines empfangenen Sendebeitrages und vor einem Umschalten auf einen im Zeitrang nachfolgenden programmierten Sendebeitrag zunächst automatisch auf einen durch die in der zweiten Speichereinrichtung (S) abgelegten Daten gekennzeichneten Sendebeitrag umgeschaltet wird.

2. Verfahren nach Anspruch 1, **dadurch gekennzeichnet,** daß in der zweiten Speichereinrichtung (S) Daten nur zu solchen Sendebeiträgen gespeichert werden, zu denen in der zweiten Speichereinrichtung (S) noch nichts gespeichert ist.

3. Verfahren nach Anspruch 1 oder 2, **dadurch gekennzeichnet,** daß die in der zweiten Speichereinrichtung (S) gespeicherten Daten in gemäß dem Zeitrang der zugehörenden Sendebeiträge abrufbarer Weise (S1, S2, ..., Sn) gespeichert sind.

4. Verfahren nach einem der vorhergehenden Ansprüche, **dadurch gekennzeichnet,** daß anläßlich des Empfangs eines Sendebeitrages, zu dem Daten in der zweiten Speichereinrichtung (S) gespeichert sind, in der zweiten Speichereinrichtung (S) eine geeignete Kennzeichnung erfolgt oder die betreffenden Daten gelöscht werden.

5. Verfahren nach einem der vorhergehenden Ansprüche, **dadurch gekennzeichnet,** daß die in der zweiten Speichereinrichtung (S) gespeicherten Daten den in dem Timer (T) gespeicherten Kennungsdaten der betreffenden Sendebeiträge entsprechen.

6. Verfahren nach einem der Ansprüche 1 bis 4, **dadurch gekennzeichnet,** daß die in der zweiten Speichereinrichtung (S) gespeicherten Daten den jeweiligen Adressen der Speicherplätze (T1, T2, ..., Tn) der in dem Timer (T) gespeicherten Daten der betreffenden Sendebeiträge entsprechen.

7. Verfahren nach einem der vorhergehenden Ansprüche, **dadurch gekennzeichnet,** daß das Umschalten auf einen im Zeitrang nächstfolgenden programmierten Sendebeitrag bei oder eine vorbestimmbare Zeit vor Erreichen seines prognostizierten Sendebeginns erfolgt.

8. Verfahren nach einem der vorhergehenden Ansprüche, **dadurch gekennzeichnet,** daß die steuerbare Betriebsart dem sendergesteuerten Wiedergeben und/oder Aufzeichnen des betreffenden Sendebeitrages entspricht.

9. Verfahren nach einem der vorhergehenden Ansprüche, **dadurch gekennzeichnet,** daß nach erfolgtem Umschalten auf die zweite Speichereinrichtung (S) und bis zum Empfang eines durch die dort abgelegten Daten (S1, S2, ..., Sn) gekennzeichneten Sendebeitrages, höchstens jedoch bis zum Abschluß eines bezüglich der weiteren Speichereinrichtung (S) vollständigen Abfragezyklus', die in der weiteren Speichereinrichtung (S) abgelegten Daten (S1, S2, ..., Sn) jeweils einmal aufgerufen werden.

10. Verfahren nach Anspruch 9, **dadurch gekennzeichnet,** daß sodann auf einen durch seinen Zeitrang oder Speicherplatz vorbestimmten programmierten Sendebeitrag umgeschaltet wird.

11. Empfängerseitige Einrichtung, insbesondere Audio-und/oder Videorecorder und/oder - Empfänger, mit einer - senderseitig durch ein während der gesamten Dauer eines Sendebeitrages übertragenes, diesen Sendebeitrag charakterisierendes Kennsignal - steuerbaren Betriebsart und mit einem programmierbaren Speicher (Timer T), in den in dem Kennsignal enthaltene, für ein Arbeiten in der steuerbaren Betriebsart erforderliche Kennungsdaten eingebbar sind, **dadurch gekennzeichnet,** daß eine mit dem programmierbaren Speicher (T) verbundene zweite Speichereinrichtung (S) vorgesehen ist, die von dem programmierbaren Speicher (T) anläßlich dessen Umschaltens auf einen im Zeitrang nachfolgenden programmierten Sendebeitrag automatisch Daten zur Speicherung erhält, die sich auf den zuvor erwarteten Sendebeitrag beziehen, sofern von diesem Sendebeitrag nichts empfangen wurde, und daß eine mit der zweiten Speichereinrichtung (S) verbundene Vergleichsstufe (11) vorgesehen ist, die nach Ablauf eines empfangenen Sendebeitrages und vor einem Umschalten auf einen im Zeitrang nachfolgenden programmierten Sendebeitrag die in der zweiten Speichereinrichtung (S) abgelegten Daten mit den ihr aus einem VPS-Decoder (5) zugeführten Daten auf Übereinstimmung vergleicht und bei Übereinstimmung das Umschalten der empfängerseitigen Einrichtung in die steuerbare Betriebsart veranlaßt.

## Claims

1. A method of processing signals in a receiver end device, more particularly in an audio and/or video recorder and /or receiver, with a mode of operation which is controllable from the transmitter end by an identification signal which characterises this transmission and is transmitted during the whole duration of a transmission, and with a programmable memory (timer T) into which are fed identifying data which are contaied in the identification signal and are required for operation in the controllable mode of operation, **characterised in that** a second memory device (S) is provided in which upon switching over to a subsequent programmed transmission data is stored automatically in the second memory device (S), said data relating to the previously expected transmission, as long as nothing has been received from this transmission, and that after expiry of a received transmission and before switch over to a subsequent programmed transmission there is switch over automatically initially to a transmission characterised by the data stored in the second memory device (S).

2. A method according to claim 1, **characterised in that** in the second memory device (S) data are stored only for those transmissions for which nothing has yet been stored in the second memory device (S).

3. A method according to claim 1 or 2, **characterised in that** the data stored in the second memory device (S) are stored in a manner (S1, S2, ..., Sn) which can be polled according to the sequence of the related transmissions.

4. A method according to any one of the preceding claims, **characterised in that** on the occasion of receiving a transmission, for which data are stored in the second memory device (S), a suitable identification takes place in the second memory device (S) or the relevant data are erased.

5. A method according to any one of the preceding claims, **characterised in that** the data stored in the second memory device (S) correspond to the identification data stored in the timer (T) of the relevant transmissions.

6. A method according to any one of claims 1 to 4, **characterised in that** the data stored in the second memory device (S) correspond to the respective addresses of the storage places (T1, T2, ..., Tn) of the data stored in the timer (T) of the relevant transmissions.

7. A method according to any one of the preceding claims **characterised in that** switching over to an immediately subsequent programmed transmission takes place when its predicted beginning of transmission is reached or a predetermmined time before it is reached.

8. A method according to any one of the preceding claims, **characterised in that** the controllable mode of operation corresponds to the transmitter controlled reproduction and/or recording of the relevant transmission.

9. A method according to any one of the preceding claims, **characterised in that** once there is switchover to the second memory device (S) and until receipt of a transmission characterised by the data stored there (S1, S2, ..., Sn), but at most until a complete interrogation cycle has been completed in relation to the further memory device (S) the data (S1, S2, ..., Sn) stored in the further memory device (S) are called up once in each case.

10. A method according to claim 9, **characterised in that** then there is switchover to a programmed transmission predetermined by its sequential position or storage place.

11. A receiver end device, more particularly an audio and/or video recorder and/or receiver, with a mode of operation which can be controlled from the transmitter end by an identification signal which characterises this transmission and transmitted during the whole duration of a transmission and with a programmable memory (timer T) into which are fed identifying data which are contained in the identification signal and are required for operation in the controllable mode of operation, **characterised in that** a second memory device (S) is provided which is connected to the programmable memory (T), said memory device receiving data automatically for storage from the programmable memory (T) upon its switchover to a subsequent programmed transmission, said data relating to the previously expected transmission, as long as nothing has been received from this transmission, and that a comparison stage (11) is provided connected with the second memory device (S) said stage, after expiry of a received transmission and before a switchover to a subsequent programmed transmission, comparing the data stored in the second memory device (S) with the data supplied to it from a VPS decoder (5) for agreement, and if there is agreement causes switchover of the receiver end device into the controllable mode of operation.

## Revendications

1. Procédé pour le traitement de signaux dans un dispositif côté récepteur, en particulier dans un enregistreur et/ou récepteur audio et/ou vidéo, avec un mode de service pouvant être commandé - côté émetteur par un signal d'identification transmis pendant toute la durée d'une émission et qui caractérise cette émission - et avec une mémoire programmable (horloge T) dans laquelle des données d'identification contenues dans le signal d'identification, nécessaires au fonctionnement dans le mode qui peut être commandé peuvent être entrées, **caractérisé en ce** qu'un second dispositif de mémoire (S) est prévu dans lequel sont mémorisées des données automatiquement à l'occasion de la commutation sur une émission programmée qui suit dans l'ordre temporel, données qui ont trait à l'émission que l'on attendait auparavant, dans la mesure où rien n'a été reçu de cette émission, et qu'il y a commutation, après achèvement d'une émission reçue et avant commutation sur une émission programmée qui suit dans l'ordre temporel, tout d'abord automatiquement sur une émission caractérisée par les données déposées dans le second dispositif de mémoire (S).

2. Procédé selon la revendication 1, **caractérisé en ce** que des données ne sont mises en mémoire dans le second dispositif de mémoire (S) que pour des émissions pour lesquelles il n'y a encore rien de mémorisé dans le second dispositif de mémoire (S).

3. Procédé selon la revendication 1 ou 2, **caractérisé en ce** que les données mémorisées dans le second dispositif de mémoire (S) sont mémorisées d'une manière qui peut être appelée selon l'ordre dans le temps des émissions correspondantes (S1, S2, ...,Sn).

4. Procédé selon l'une des revendications précédentes, **caractérisé en ce** qu'à l'occasion de la réception d'une émission pour laquelle des données sont mémorisées dans le second dispositif de mémoire (S) une identification appropriée est réalisée dans le second dispositif de mémoire (S) ou les données concernées sont effacées.

5. Procédé selon l'une des revendications précédentes, **caractérisé en ce** que les données mémorisées dans le second dispositif de mémoire (S) correspondent aux données d'identification mémorisées dans l'horloge (T) des émissions concernées.

**6.** Procédé selon l'une des revendications 1 à 4, **caractérisé en ce** que les données mémorisées dans le second dispositif de mémoire (S) correspondent aux adresses respectives des emplacements de mémoire (T1, T2, ... Tn) des données mémorisées dans l'horloge (T) des émissions concernées.

**7.** Procédé selon l'une des revendications précédentes, **caractérisé en ce** que la commutation sur une émission programmée qui suit dans l'ordre temporel ou sur un temps pouvant être prédéterminé a lieu avant d'atteindre son début d'émission prognostiqué.

**8.** Procédé selon l'une des revendications précédentes, **caractérisé en ce** que le mode de service pouvant être commandé correspond à la reproduction et/ou l'enregistrement commandé par l'émetteur de l'émission concernée.

**9.** Procédé selon l'une des revendications précédentes, **caractérisé en ce** que, après que la commutation sur le second dispositif de mémoire (S) ait eu lieu et jusqu'à réception d'une émission caractérisée par les données (S1, S2, ..., Sn) qui y sont déposées, au plus tard cependant jusqu'à l'achèvement d'un cycle d'interrogation complet relatif au second dispositif de mémoire (S), les données (S1, S2, ..., Sn) déposées dans le second dispositif de mémoire (S) sont respectivement appelées une fois.

**10.** Procédé selon la revendication 9, **caractérisé en ce** qu'il y a ensuite commutation sur une émission programmée prédéterminée par son ordre dans le temps ou son emplacement de mémoire.

**11.** Dispositif côté récepteur, en particulier enregistreur et/ou récepteur audio et/ou vidéo, avec un mode de service pouvant être commandé - côté émetteur par un signal d'identification transmis pendant toute la durée d'une émission et qui caractérise cette émission - et avec une mémoire programmable (horloge T) dans laquelle des données d'identification contenues dans le signal d'identification, nécessaires au fonctionnement dans le mode qui peut être commandé, **caractérisé en ce** qu'un second dispositif de mémoire (S) lié à la mémoire programmable (T) est prévu, dispositif qui reçoit automatiquement les données de la mémoire programmable (T) pour mise en mémoire à l'occasion de la commutation de celle-ci sur une émission programmée qui suit dans l'ordre temporel, donnés qui ont trait à l'émission que l'on attendait autparavant, dans la mesure où rien n'a été reçu de cette émission, et qu'il est prévu un étage comparateur (11), lié au second dispositif de mémoire (S), qui compare, après l'achèvement d'une émission reçue et avant de commuter sur une émission programmée qui suit dans l'ordre temporel, les données déposées dans le second dispositif de mémoire (S) avec les données d'un décodeur de signal de système pour programme vidéo (5) qui lui amenées pour voir si elles coïncident et qui, lorsqu'il y a concordance, provoque la commutation du dispositif côté récepteur sur le mode de service qui peut être commandé.

Fig.1

Fig.2

EP 0 237 958 B1

Fig.3